# EUROPEAN PATENT SPECIFICATION

(11) **EP 3 462 780 B1**
(45) Date of publication and mention of the grant of the patent: **04.11.2020**
(21) Application number: 16906778.2
(22) Date of filing: 30.06.2016
(51) Int. Cl.: H04W 48/08, H04W 72/04, H04L 5/00

(54) **FREQUENCY BAND PROCESSING METHOD AND DEVICE**
FREQUENZBANDVERARBEITUNGSVERFAHREN UND -VORRICHTUNG
PROCÉDÉ ET DISPOSITIF DE TRAITEMENT DE BANDE DE FRÉQUENCE

(43) Date of publication of application: 03.04.2019
(73) Proprietor: Huawei Technologies Co., Ltd., Longgang District Shenzhen, Guangdong 518129 (CN)
(72) Inventor: YONG, Chaoliang, Shenzhen Guangdong 518129 (CN)
(74) Representative: Gill Jennings & Every LLP
(86) International application number: PCT/CN2016/088007
(87) International publication number: WO 2018/000378

(56) References cited:
- WO-A1-2015/094723
- CN-A- 103 733 703
- CN-A- 104 160 769
- US-A1- 2013 021 902
- US-A1- 2014 161 002
- US-A1- 2015 098 425
- US-A1- 2015 163 041
- US-A1- 2015 222 410

## Description

### TECHNICAL FIELD

The present invention relates to wireless communications technologies, and in particular, to a frequency band processing method and apparatus.

### BACKGROUND

With development of mobile communications technologies and broadband wireless access technologies, mobile communications services and broadband wireless access services are closely related to each other. To meet a need for a high-bandwidth trend of mobile communication and to cope with a challenge of mobilization of broadband communication, a carrier aggregation (Carrier Aggregation, CA) technology is applied to a mobile communications system.

In the CA technology, larger bandwidth is obtained by aggregating a plurality of contiguous or non-contiguous component carriers (Component Carrier, CC), so that a system data transmission rate and a system throughput are improved, and a non-contiguous spectrum problem of an operator is also resolved.

The CA technology allows a terminal with a CA capability to use a plurality of aggregated carriers to transmit data. The plurality of aggregated CCs include a primary component carrier (Primary Component Carrier, PCC) and at least one secondary component carrier (Secondary Component Carrier, SCC). The terminal with the CA capability reports the CA capability of the terminal, so that a network side selects an SCC for the terminal based on the CA capability of the terminal.

However, in a multi-band overlapping scenario, the CA capability of the terminal is usually subject to a limitation, and it is probable that CA or an optimal CA combination cannot be implemented.

US 2015/098425 A1 discloses systems and methods relating to configuring a Secondary Component Carrier (SCC) for a wireless device in a cellular communications network. In some embodiments, the method comprises obtaining capabilities of the wireless device, where the capabilities indicate a frequency band combination supported by the wireless device. The frequency band combination supported by the wireless device includes a first frequency band supported by a base station and the wireless device used for a Primary Cell (PCell) of the wireless device and a second frequency band supported by the wireless device but not supported by the base station. The method further comprises identifying an overlap between the second frequency band supported by the wireless device but not supported by the base station and a third frequency band supported by the base station but not supported by the wireless device and configuring the SCC for the wireless device in the overlap.

US 2013/021902 A1 describes a method for determining downlink time reference, including: a terminal taking a downlink primary component carrier as a time reference and determining an absolute time to send uplink data according to a time advance based on the time reference. Also disclosed is a method for determining downlink time reference, including: a terminal taking a downlink component carrier which performs random access, or a downlink component carrier corresponding to an uplink component carrier, or another downlink component carrier within a same frequency band as the downlink component carrier corresponding to the uplink component carrier as a time reference, and determining an absolute time to send uplink data according to a time advance based on the time reference.

US2015/222410 A1 discloses an apparatus and methods for frequency hopping among a set of frequency channels used for secondary cells by wireless devices operating with carrier aggregation across a combination of licensed and unlicensed radio frequency (RF) bands. A wireless device establishes a connection with an eNodeB using a primary component carrier (PCC) of a primary cell in a licensed radio frequency band. The wireless device obtains a configuration for a secondary cell operating in the unlicensed radio frequency band from the eNodeB, the configuration including a set of RF channels and a frequency-hopping pattern for communicating via a secondary component carrier in the secondary cell. The wireless device transmits to or receives from the eNodeB, via the SCC during a first hop of the frequency-hopping pattern using a first frequency channel in the set of frequency channels, and using a second frequency channel during a second hop.

### SUMMARY

Embodiments of the present invention provide two frequency band processing methods as disclosed in independent claims 1 and 2, two corresponding apparatuses as disclosed in independent claims 3 and 4 as well as a corresponding computer readable storage medium as disclosed in independent claim 5, so as to achieve a better CA effect.

A first aspect of the embodiments of the present invention provides a frequency band processing method, where the method is applied to a communications system with frequency band overlapping; in the communications system, a primary frequency band and a secondary frequency band are configured for a serving cell of a terminal, and the terminal initially accesses a network from the primary frequency band; and the method includes:
obtaining, by a base station, CA capability information of the terminal;
determining, by the base station based on the CA capability information, that an access frequency band of the terminal is to be switched from the primary frequency band to the secondary frequency band; and
sending, by the base station, a switching instruction to the terminal, where the switching instruction is used to instruct the terminal to switch the access frequency band from the primary frequency band to the secondary frequency band.

Optionally, the method further includes:
sending, by the base station, configuration information to the terminal, where the configuration information is used to instruct the terminal to first access the network from the secondary frequency band.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

The determining, by the base station based on the CA capability information, that an access frequency band of the terminal is to be switched from the primary frequency band to the secondary frequency band includes:
obtaining, by the base station based on the CA capability information, an aggregatable frequency band combination corresponding to the primary frequency band and an aggregatable frequency band combination corresponding to the secondary frequency band; and
determining, by the base station based on the aggregatable frequency band combination corresponding to the primary frequency band and the aggregatable frequency band combination corresponding to the secondary frequency band, that the access frequency band of the terminal is to be switched from the primary frequency band to the secondary frequency band.

The determining, by the base station based on the aggregatable frequency band combination corresponding to the primary frequency band and the aggregatable frequency band combination corresponding to the secondary frequency band, that the access frequency band of the terminal is to be switched from the primary frequency band to the secondary frequency band may be: when the aggregatable frequency band combination corresponding to the secondary frequency band is superior to the aggregatable frequency band combination corresponding to the primary frequency band, determining, by the base station, that the access frequency band of the terminal is to be switched from the primary frequency band to the secondary frequency band.

A second aspect of the embodiments of the present invention provides a frequency band processing method, where the method is applied to a communications system with frequency band overlapping; in the communications system, a primary frequency band and a secondary frequency band are configured for a serving cell of a terminal, and the terminal initially accesses a network from the primary frequency band; and the method includes:
receiving, by the terminal, a switching instruction sent by a base station, where the switching instruction is used to instruct the terminal to switch an access frequency band from the primary frequency band to the secondary frequency band; and
switching, by the terminal, the access frequency band from the primary frequency band to the secondary frequency band according to the switching instruction.

Optionally, the method further includes:
receiving, by the terminal, configuration information sent by the base station, where the configuration information is used to instruct the terminal to first access the network from the secondary frequency band; and
accessing, by the terminal, the network from the secondary frequency band based on the configuration information when accessing the network next time.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

A third aspect of the embodiments of the present invention provides a frequency band processing method, where the method is applied to a communications system with frequency band overlapping; in the communications system, a primary frequency band and a secondary frequency band are configured for a serving cell of a terminal, and the terminal initially accesses a network from the primary frequency band; and the method includes:
generating, by a base station, configuration information, where the configuration information is used to instruct the terminal to first access the network from the secondary frequency band; and
sending, by the base station, the configuration information to the terminal.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

A fourth aspect of the embodiments of the present invention provides a frequency band processing method, where the method is applied to a communications system with frequency band overlapping; in the communications system, a primary frequency band and a secondary frequency band are configured for a serving cell of a terminal, and the terminal initially accesses a network from the primary frequency band; and the method includes:
receiving, by the terminal, configuration information sent by a base station, where the configuration information is used to instruct the terminal to first access the network from the secondary frequency band; and
accessing, by the terminal, the network from the secondary frequency band based on the configuration information.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

A fifth aspect of the embodiments of the present invention provides a frequency band processing apparatus, where the apparatus includes modules or means (means) that are configured to perform the foregoing method provided in any one of the first aspect and the implementations of the first aspect.

A sixth aspect of the embodiments of the present invention provides a frequency band processing apparatus, where the apparatus includes modules or means (means) that are configured to perform the foregoing method provided in the second aspect and the implementations of the second aspect.

A seventh aspect of the embodiments of the present invention provides a frequency band processing apparatus, where the apparatus includes modules or means (means) that are configured to perform the foregoing method provided in the third aspect and the implementations of the third aspect.

An eighth aspect of the embodiments of the present invention provides a frequency band processing apparatus, where the apparatus includes modules or means (means) that are configured to perform the foregoing method provided in the fourth aspect and the implementations of the fourth aspect.

A ninth aspect of the embodiments of the present invention provides a frequency band processing apparatus, where the apparatus includes a processor and a memory, the memory is configured to store a program, and the processor invokes the program stored in the memory, to perform the method provided in the first aspect of this application.

A tenth aspect of the embodiments of the present invention provides a frequency band processing apparatus, where the apparatus includes a processor and a memory, the memory is configured to store a program, and the processor invokes the program stored in the memory, to perform the method provided in the second aspect of this application.

An eleventh aspect of the embodiments of the present invention provides a frequency band processing apparatus, where the apparatus includes a processor and a memory, the memory is configured to store a program, and the processor invokes the program stored in the memory, to perform the method provided in the third aspect of this application.

A twelfth aspect of the embodiments of the present invention provides a frequency band processing apparatus, where the apparatus includes a processor and a memory, the memory is configured to store a program, and the processor invokes the program stored in the memory, to perform the method provided in the fourth aspect of this application.

A thirteenth aspect of the embodiments of the present invention provides a frequency band processing apparatus, including at least one processing element (or chip) configured to perform the foregoing method according to the first aspect.

A fourteenth aspect of the embodiments of the present invention provides a frequency band processing apparatus, including at least one processing element (or chip) configured to perform the foregoing method according to the second aspect.

A fifteenth aspect of the embodiments of the present invention provides a frequency band processing apparatus, including at least one processing element (or chip) configured to perform the foregoing method according to the third aspect.

A sixteenth aspect of the embodiments of the present invention provides a frequency band processing apparatus, including at least one processing element (or chip) configured to perform the foregoing method according to the fourth aspect.

A seventeenth aspect of the embodiments of the present invention provides a program, where when executed by a processor, the program is used to perform the foregoing method according to the first aspect.

An eighteenth aspect of the embodiments of the present invention provides a program product, such as a computer-readable storage medium, where the program product includes the program according to the seventeenth aspect.

A nineteenth aspect of the embodiments of the present invention provides a program, where when executed by a processor, the program is used to perform the foregoing method according to the second aspect.

A twentieth aspect of the embodiments of the present invention provides a program product, such as a computer-readable storage medium, where the program product includes the program according to the nineteenth aspect.

A twenty-first aspect of the embodiments of the present invention provides a program, where when executed by a processor, the program is used to perform the foregoing method according to the third aspect.

A twenty-second aspect of the embodiments of the present invention provides a program product, such as a computer-readable storage medium, where the program product includes the program according to the twenty-first aspect.

A twenty-third aspect of the embodiments of the present invention provides a program, where when executed by a processor, the program is used to perform the foregoing method according to the fourth aspect.

A twenty-fourth aspect of the embodiments of the present invention provides a program product, such as a computer-readable storage medium, where the program product includes the program according to the twenty-third aspect.

In the foregoing aspects, the base station determines, based on the CA capability information of the terminal, that the access frequency band of the terminal is to be switched from the primary frequency band to the secondary frequency band, and sends the switching instruction to the terminal, so that the terminal switches the access frequency band from the primary frequency band to the secondary frequency band according to the switching instruction. After switching, the terminal can obtain a better frequency band combination and achieve a better CA effect, so that larger bandwidth can be obtained and user experience is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may derive other drawings from these accompanying drawings without creative efforts.
FIG. 1 is a framework diagram of a communications system;
FIG. 2 is a schematic diagram of a CA scenario;
FIG. 3 is a schematic diagram of intra-band contiguous CA;
FIG. 4 is a schematic diagram of intra-band non-contiguous CA;
FIG. 5 is a schematic diagram of inter-band CA;
FIG. 6 is a schematic diagram of frequency band overlapping;
FIG. 7 is a schematic flowchart of a frequency band processing method according to an embodiment of the present invention;
FIG. 8 is a schematic flowchart of another frequency band processing method according to an embodiment of the present invention;
FIG. 9 is a schematic structural diagram of a frequency band processing apparatus according to an embodiment of the present invention;
FIG. 10 is a schematic structural diagram of another frequency band processing apparatus according to an embodiment of the present invention;
FIG. 11 is a schematic structural diagram of another frequency band processing apparatus according to an embodiment of the present invention;
FIG. 12 is a schematic structural diagram of another frequency band processing apparatus according to an embodiment of the present invention;
FIG. 13 is a schematic structural diagram of a base station according to an embodiment of the present invention; and
FIG. 14 is a schematic structural diagram of a terminal according to an embodiment of the present invention.

### DESCRIPTION OF EMBODIMENTS

The following describes some terms in the embodiments of the present invention for ease of understanding by persons skilled in the art.

Abase station, also referred to as a radio access network (Radio Access Network, RAN) device, is a device that connects a terminal to a wireless network. The base station may be a base transceiver station (Base Transceiver Station, BTS for short) in the Global System for Mobile communications (Global System for Mobile Communications, GSM for short) or the Code Division Multiple Access (Code Division Multiple Access, CDMA for short) system, or may be a NodeB (NodeB, NB for short) in the Wideband Code Division Multiple Access (Wideband Code Division Multiple Access, WCDMA for short) system, or may be an evolved NodeB (Evolved Node B, eNB or eNodeB for short) in the Long Term Evolution (Long Term Evolution, LTE for short) system, a relay node, an access point, a base station in a future 5G network, or the like. This is not limited herein.

A terminal may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or a user device (User Device or User Equipment). This is not limited herein.

In the embodiments of the present invention, "a plurality of' means two or more than two. "And/or" describes an association relationship of associated objects and represents that three relationships may exist. For example, A and/or B may represent the following three cases: Only A exists, both A and B exist, and only B exists. The character "/" generally indicates an "or" relationship between the associated objects before and after the character.

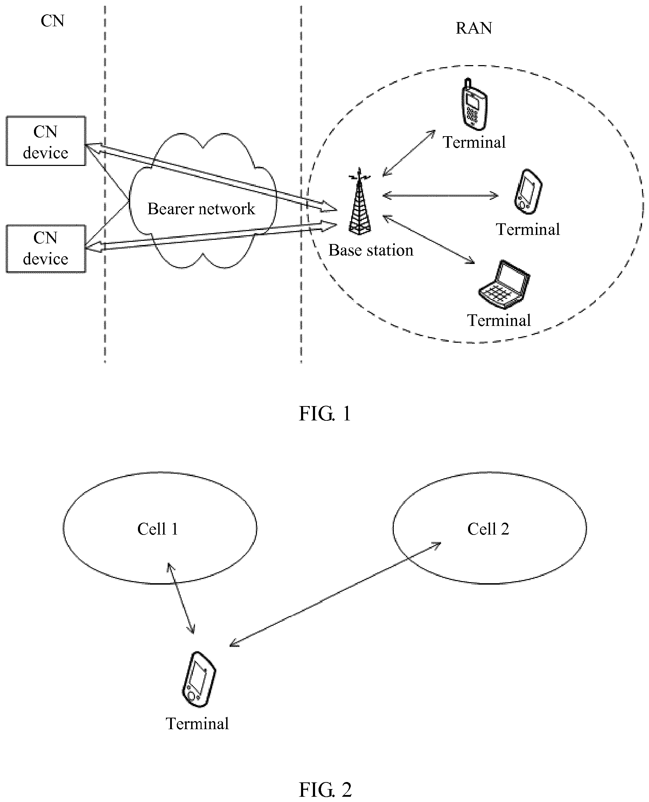

FIG. 1 is a framework diagram of a communications system. As shown in FIG. 1, the communications system includes a core network (Core network, CN) and a radio access network (Radio Access Network, RAN), and the CN may communicate with the RAN through a bearer network (also referred to as a transport network). For example, the bearer network includes devices such as an optical fiber and a router. A terminal accesses the RAN through a base station, and communicates with an external network through a CN device.

FIG. 2 is a schematic diagram of a CA scenario. As shown in FIG. 2, a terminal accesses a wireless network in a cell 1 (cell 1), and the terminal is a terminal that supports CA and may report a CA capability to a base station serving the cell 1. The base station serving the cell 1 may configure a cell 2 as a secondary cell for the terminal based on the CA capability reported by the terminal. The cell 1 and the cell 2 transmit data for the terminal together. The cell 1 is a primary cell and corresponds to a PCC; the cell 2 is a secondary cell and corresponds to an SCC. This is a CA scenario in which two CCs are used as an example for description. Actually, more CCs may be aggregated to serve the terminal. Based on distribution of the aggregated CCs in a frequency band, CA may be classified into intra-band aggregation (Intra-band CA) and inter-band aggregation (Inter-band CA). The intra-band CA is classified into contiguous CA and non-contiguous CA.

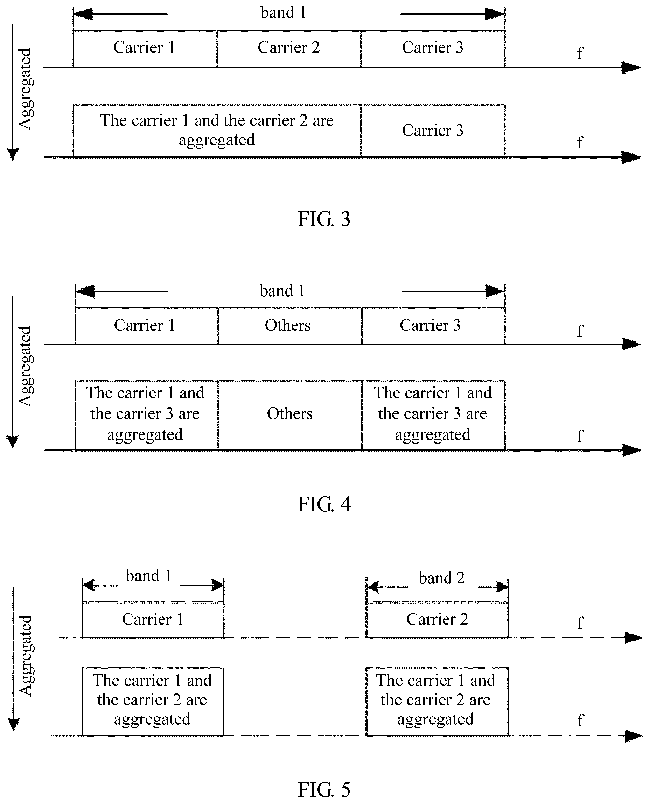

Referring to FIG. 3 to FIG. 5, FIG. 3 is a schematic diagram of intra-band contiguous CA. As shown in FIG. 3, contiguous carriers, a carrier 1 and a carrier 2, in a same frequency band, a band 1, may be aggregated to provide larger transmission bandwidth for a terminal. FIG. 4 is a schematic diagram of intra-band non-contiguous CA. As shown in FIG. 4, non-contiguous carriers, a carrier 1 and a carrier 3, in a same frequency band, a band 1, may be aggregated to provide larger transmission bandwidth for a terminal. FIG. 5 is a schematic diagram of inter-band CA. As shown in FIG. 5, carriers, a carrier 1 and a carrier 2, in different frequency bands, a band 1 and a band 2, may be aggregated to provide larger transmission bandwidth for a terminal. In all the foregoing accompanying drawings, "f" represents frequency.

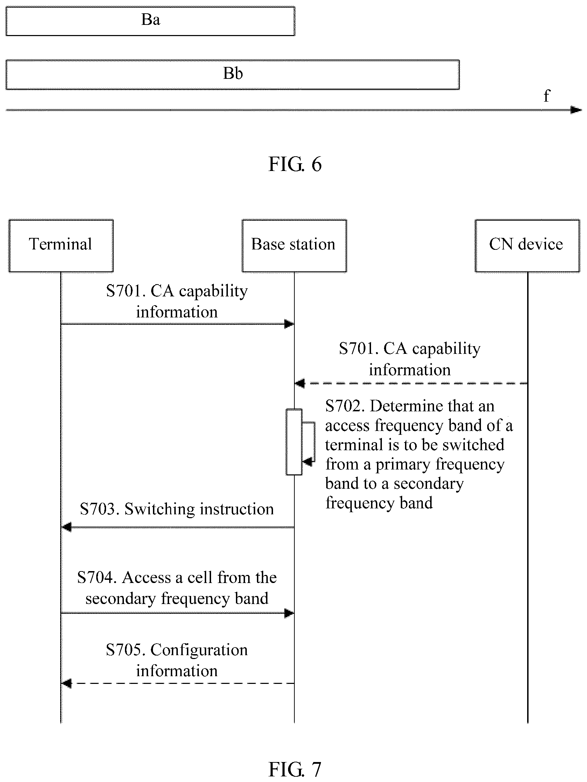

Currently, a frequency band overlapping scenario exists in a network, that is, a same physical frequency is distributed in different frequency bands. This is also referred to as a multi-band overlapping scenario. Referring to FIG. 6, in FIG. 6, a frequency band Ba and a frequency band Bb have an overlapping region in frequency. A plurality of frequency bands may be configured for a cell whose frequency is in this region. For example, the frequency band Ba and the frequency band Bb are configured. One frequency band is a primary frequency band, the other frequency band is the secondary frequency band, and a frequency of the cell in the primary frequency band is different from a frequency of the cell in the secondary frequency band. For example, the frequency band Ba is the primary frequency band, and the frequency band Bb is the secondary frequency band. In FIG. 6, "f' represents frequency.

Currently, a terminal first accesses the network from the primary frequency band. CA capabilities of the terminal in the primary frequency band and the secondary frequency band may be different. For example, there are the following scenarios:
(1) The primary frequency band does not support CA, but the secondary frequency band supports the CA.
(2) The primary frequency band supports 2CC aggregation (2CC for short), and the secondary frequency band supports 3CC aggregation (3CC for short).
(3) The primary frequency band does not support uplink (uplink, UL for short) 2CC, but the secondary frequency band supports UL 2CC.
(4) The primary frequency band does not support inter-system aggregation, but the secondary frequency band supports inter-system aggregation. There may be a plurality of cases of inter-system aggregation, for example, aggregation between frequency division duplex (frequency division duplex, FDD for short) and time division duplex (time division duplex, TDD for short). This is not limited herein.

The difference or asymmetry in the CA capabilities of the terminal in the primary frequency band and the secondary frequency band may affect a CA effect. For example, when the primary frequency band Ba does not support the CA but the secondary frequency band Bb supports the CA, if the terminal first accesses the network from the primary frequency band Ba, the CA cannot be performed, and user experience is affected. For another example, when the primary frequency band Ba supports 2CC and the secondary frequency band Bb supports 3CC, if the terminal first accesses the network from the primary frequency band Ba, only 2CC can be performed, and a CA capability is not fully utilized to achieve a desirable effect. For still another example, when the primary frequency band Ba does not support UL 2CC, but the secondary frequency band Bb supports UL 2CC, if the terminal first accesses the network from the primary frequency band Ba, UL 2CC cannot be performed, and a CA capability is not fully utilized to achieve a desirable effect. For yet another example, when the primary frequency band Ba does not support inter-system aggregation but the secondary frequency band Bb supports inter-system aggregation, if the terminal first accesses the network from the primary frequency band Ba, inter-system aggregation cannot be performed, and user experience is affected.

In view of such cases, an embodiment of the present invention provides a frequency band processing method, to allow a terminal to access a network from a more suitable frequency band, thereby improving user experience.

The frequency band processing method is mainly applied to a communications system with frequency band overlapping. In the communications system, a primary frequency band and a secondary frequency band are configured for a serving cell of the terminal, and the terminal initially accesses a network from the primary frequency band.

FIG. 7 is a schematic flowchart of a frequency band processing method according to an embodiment of the present invention. As shown in FIG. 7, the method includes the following steps.

S701. A base station obtains CA capability information of a terminal.

The base station may obtain the CA capability information of the terminal from the terminal, or may obtain the CA capability information of the terminal from a CN. For example, the terminal may proactively report the CA capability information of the terminal to the base station, or when the base station needs the CA capability information of the terminal, the base station may query the terminal, and the terminal then reports the CA capability information of the terminal to the base station. When the CA capability information is reported by the terminal, the terminal may report the CA capability information of the terminal to the base station by using an information element "supported BandCombination (supportedBandCombination)". When the CA capability information of the terminal is obtained from the CN, the CA capability information of the terminal may be sent by a CN device to the base station by using a context of the terminal.

S702. The base station determines, based on the CA capability information, that an access frequency band of the terminal is to be switched from a primary frequency band to a secondary frequency band.

Based on the CA capability information reported by the terminal, the base station may learn of a CA frequency band combination supported by the terminal. In addition, CA configurations and bandwidth combination sets (CA configurations and bandwidth combination sets) are stored in the base station. The base station may determine, based on the CA configurations and bandwidth combination sets, a CA frequency band combination that can be supported by the terminal in the primary frequency band and a CA frequency band combination that can be supported by the terminal in the secondary frequency band. The CA frequency band combination that can be supported by the terminal in the primary frequency band is compared with the CA frequency band combination that can be supported by the terminal in the secondary frequency band, to determine which frequency band can achieve a better CA effect. If the primary frequency band can achieve the better CA effect, no switching needs to be performed; if the secondary frequency band can achieve the better CA effect, it is determined that the access frequency band of the terminal is to be switched from the primary frequency band to the secondary frequency band. Using the foregoing scenarios as an example, when larger bandwidth is obtained through frequency band aggregation supported by the secondary frequency band, it is determined that the access frequency band of the terminal is to be switched from the primary frequency band to the secondary frequency band.

S703. The base station sends a switching instruction to the terminal, where the switching instruction is used to instruct the terminal to switch the access frequency band from the primary frequency band to the secondary frequency band.

S704. The terminal receives the switching instruction sent by the base station, and accesses a cell from the secondary frequency band according to the switching instruction.

The foregoing switching from the primary frequency band to the secondary frequency band may be implemented through intra-cell switching, the switching instruction may be a radio resource control connection reconfiguration (radio resource control, RRC, connection reconfiguration) message, and the RRC connection reconfiguration message carries a frequency of the cell in the secondary frequency band, so that the terminal re-accesses the cell in the frequency in the secondary frequency band. Further, the RRC connection reconfiguration message may further carry information about an SCC, so as to notify the terminal of an aggregated SCC.

After the terminal accesses the cell from the secondary frequency band, the base station may perform CA based on an aggregatable frequency band combination corresponding to the secondary frequency band, so as to obtain larger bandwidth.

In this embodiment, the base station determines, based on the CA capability information of the terminal, that the access frequency band of the terminal is to be switched from the primary frequency band to the secondary frequency band, and sends the switching instruction to the terminal, so that the terminal switches the access frequency band from the primary frequency band to the secondary frequency band according to the switching instruction. After switching, the terminal can obtain a better frequency band combination and achieve a better CA effect, so that larger bandwidth can be obtained and user experience is improved.

Optionally, before step S702, the base station may first determine a current access frequency band of the terminal. If the current access frequency band is the primary frequency band, steps S702 and S703 are performed; if the current access frequency band of the terminal is the secondary frequency band, steps S702 and S703 do not need to be performed.

Further, the determining, by the base station based on the CA capability information, that an access frequency band of the terminal is to be switched from a primary frequency band to a secondary frequency band may be: obtaining, by the base station based on the CA capability information, an aggregatable frequency band combination corresponding to the primary frequency band and an aggregatable frequency band combination corresponding to the secondary frequency band; and determining, by the base station based on the aggregatable frequency band combination corresponding to the primary frequency band and the aggregatable frequency band combination corresponding to the secondary frequency band, that the access frequency band of the terminal is to be switched from the primary frequency band to the secondary frequency band.

The determining, by the base station based on the aggregatable frequency band combination corresponding to the primary frequency band and the aggregatable frequency band combination corresponding to the secondary frequency band, that the access frequency band of the terminal is to be switched from the primary frequency band to the secondary frequency band may be: when the aggregatable frequency band combination corresponding to the secondary frequency band is superior to the aggregatable frequency band combination corresponding to the primary frequency band, determining, by the base station, that the access frequency band of the terminal is to be switched from the primary frequency band to the secondary frequency band.

It should be noted that, the aggregatable frequency band combination corresponding to the primary frequency band is the CA frequency band combination that can be supported by the terminal in the primary frequency band, and the aggregatable frequency band combination corresponding to the secondary frequency band is the CA frequency band combination that can be supported by the terminal in the secondary frequency band. The CA frequency band combination that can be supported by the terminal in the primary frequency band is compared with the CA frequency band combination that can be supported by the terminal in the secondary frequency band. When the CA frequency band combination that can be supported by the terminal in the secondary frequency band can achieve a better CA effect, for example, larger system bandwidth can be obtained, it is determined that the access frequency band of the terminal is to be switched from the primary frequency band to the secondary frequency band.

A frequency band combination that is superior to the aggregatable frequency band combination corresponding to the primary frequency band may exist in the aggregatable frequency band combination corresponding to the secondary frequency band. Specifically, which frequency band combination is superior may be determined according to a quantity of frequency bands, a quantity of multiple-input multiple-output (multiple-input multiple-output, MIMO for short) layers, a quantity of uplink carriers, or the like in the aggregatable frequency band combination. For example, a frequency band combination with more frequency bands is superior to a frequency band combination with fewer frequency bands, a frequency band combination with more MIMO layers is superior to a frequency band combination with fewer MIMO layers, a frequency band combination with more uplink carriers is superior to a frequency band combination with fewer uplink carriers, or the like. This is not limited herein.

It should be noted that, for different operators, different terminals, and different application scenarios, the aggregatable frequency band combinations corresponding to the primary frequency band and the secondary frequency band are different, and the base station analyzes, based on the CA capability information reported by the terminal, the frequency band combination corresponding to the primary frequency band and the frequency band combination corresponding to the secondary frequency band, to learn of which frequency band combination is superior, so as to determine whether the terminal needs to perform switching. For example:

(a) An operator supports CA to be performed in a primary frequency band and a secondary frequency band, but multi-carrier aggregation capabilities supported by a terminal in the primary frequency band and the secondary frequency band (reference may be made to the foregoing four application scenarios) are different. Assuming that a primary frequency band configured by a base station is denoted as Ba and a secondary frequency band configured by the base station is denoted as Bb, aggregatable frequency band combinations supported by the terminal include: Ba+Bc, Bb+Bc, and Bb+Bc+Bd. Bc and Bd are frequency bands other than the primary frequency band and the secondary frequency band.

The base station may learn, based on CA capability information reported by the terminal, that if the terminal accesses a network from the primary frequency band Ba, aggregation of a maximum of only two frequency bands "Ba+Bc" can be performed, but if the terminal accesses the network from the secondary frequency band Bb, aggregation of a maximum of three frequency bands "Bb+Bc+Bd" can be performed, so that larger bandwidth can be provided and user experience are better. After switching, the aggregation of three frequency bands "Bb+Bc+Bd" can be performed.

(b) Uplink and downlink capabilities supported by a terminal in a primary frequency band and a secondary frequency band are inconsistent. For example, assuming that a primary frequency band configured for a cell is denoted as Ba and a secondary frequency band configured for the cell is denoted as Bb, aggregatable frequency band combinations supported by the terminal include: Ba+Bc and Bb+Bc, but "Ba+Bc" can only support Ba single uplink aggregation, and "Bb+Bc" supports Bb and Bc dual uplink aggregation. If the terminal accesses a network from the primary frequency band Ba, the dual uplink aggregation cannot be performed.

After switching, the Bb and Bc dual uplink aggregation can be performed.

It should be noted that, if there are a plurality of secondary frequency bands, the base station may alternatively determine, based on an aggregatable frequency band combination corresponding to each secondary frequency band, which secondary frequency band the access frequency band of the terminal is to be switched to. Specifically, a secondary frequency band including an optimal aggregatable frequency band combination is selected for the terminal to access the network. Similarly, which aggregatable frequency band combination is superior may be determined according to a quantity of frequency bands, a quantity of MIMO layers, a quantity of uplink carriers, or the like in the aggregatable frequency band combination. For example, a frequency band combination with more frequency bands is superior to a frequency band combination with fewer frequency bands, a frequency band combination with more MIMO layers is superior to a frequency band combination with fewer MIMO layers, a frequency band combination with more uplink carriers is superior to a frequency band combination with fewer uplink carriers, or the like. This is not limited herein.

Optionally, the base station may further send a frequency band combination indication to the terminal. The frequency band combination indication may carry an identifier of at least one frequency band. The base station may perform frequency band aggregation based on the frequency band combination indication. That is, the base station may notify the terminal of a preferred frequency band combination, and the terminal performs frequency band aggregation based on the combination. For example, if the base station indicates "Bb+Bc+Bd" in the frequency band combination indication, the terminal may perform aggregation of three frequency bands "Bb+Bc+Bd".

It should be noted that the frequency band combination indication and the foregoing switching instruction may be carried in a same message, or may be carried in different messages. This is not limited herein.

Still referring to FIG. 7, optionally, the base station may further send configuration information to the terminal (S705), to instruct the terminal to first access a cell (or a network) from the secondary frequency band. In other words, priorities of the primary frequency band and the secondary frequency band are changed. In this way, when the terminal performs access next time, CA that is consistent with a currently-selected policy can be implemented without performing switching from the primary frequency band to the secondary frequency band. Preferably, the configuration information may be sent when the terminal is released, for example, the configuration information may be sent by using Idle Mode Mobility Controlnfo (Idle Mode Mobility ControlInfo, IMMCI for short).

When UE is released, a high-priority secondary frequency band is configured in an IMMCI information element, so that when accessing the network next time , the UE does not need to perform intra-cell switching, but selects carrier aggregation that is consistent with a currently-selected policy.

Content of the configuration information is not limited herein, provided that the configuration information can be used to instruct the terminal to first access a cell from the secondary frequency band. In an implementation, the configuration information may include information and a priority of a frequency of the cell in the primary frequency band and information and a priority of a frequency of the cell in the secondary frequency band. The priority of the frequency of the cell in the secondary frequency band is higher than the priority of the frequency of the cell in the primary frequency band. The information of the frequency may be a frequency identifier. In addition, the configuration information may further include another frequency, and the another frequency may be a frequency of the cell in another frequency band, or may be a frequency of another cell. This is not limited herein.

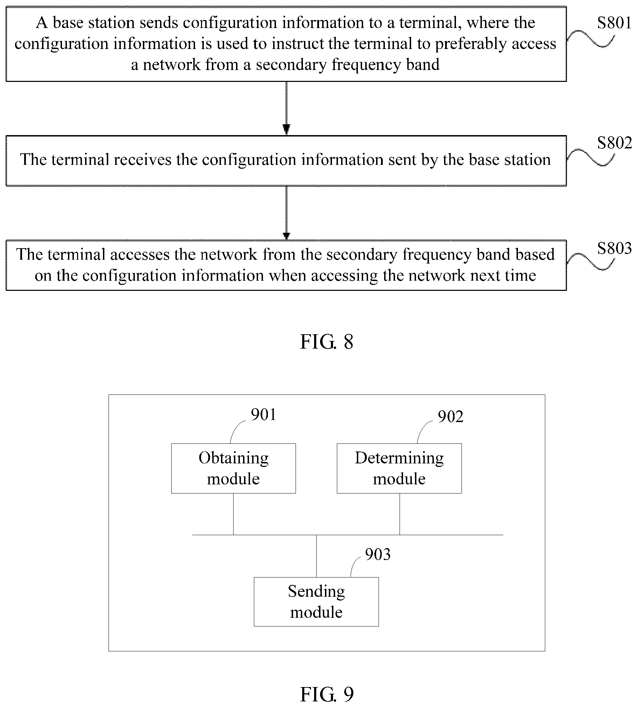

FIG. 8 is a schematic flowchart of another frequency band processing method according to an embodiment of the present invention. As shown in FIG. 8, the method includes the following steps.

S801. A base station sends configuration information to a terminal, where the configuration information is used to instruct the terminal to first access a network from a secondary frequency band.

S802. The terminal receives the configuration information sent by the base station.

S803. The terminal accesses the network from the secondary frequency band based on the configuration information when accessing the network next time.

In this manner, the base station notifies the terminal of a preferred frequency band, and the terminal may store the preferred frequency band, so that when accessing the network next time, the terminal directly accesses the network based on the stored optimized frequency band, instead of performing switching after accessing the network.

In specific implementation, when the terminal is in an idle state, the base station may add the configuration information to a release indication message to send to the terminal.

Optionally, when UE is released, a high-priority secondary frequency band is configured in an IMMCI information element, so that when accessing the network next time, the UE does not need to perform intra-cell switching, but selects carrier aggregation that is consistent with a currently-selected policy.

Content of the configuration information is not limited herein, provided that the configuration information can be used to instruct the terminal to first access a cell from the secondary frequency band. In an implementation, the configuration information may include information and a priority of a frequency of the cell in the primary frequency band and information and a priority of a frequency of the cell in the secondary frequency band. The priority of the frequency of the cell in the secondary frequency band is higher than the priority of the frequency of the cell in the primary frequency band. The information of the frequency may be a frequency identifier. In addition, the configuration information may further include another frequency, and the another frequency may be a frequency of the cell in another frequency band, or may be a frequency of another cell. This is not limited herein. After receiving the configuration information, the terminal stores the information and priority of the frequency of the cell in the primary frequency band and the information and priority of the frequency of the cell in the secondary frequency band. When the terminal needs to access the network next time, the terminal determines a highest-priority frequency based on priority information corresponding to each frequency, and accesses the network from the highest-priority frequency.

It should be noted that the embodiment shown in FIG. 8 may alternatively be an independent embodiment. That is, the base station generates the configuration information and sends the configuration information to the terminal.

After receiving the configuration information, the terminal accesses the network from the secondary frequency band based on the configuration information.

After receiving the configuration information, the terminal may store the configuration information. If the terminal has already accessed the network currently, the terminal may access the network from the secondary frequency band when accessing the network next time; if the terminal does not access the network, the terminal may directly access the network from the secondary frequency band when the terminal needs to access the network.

In this embodiment, the base station sends the configuration information to the terminal, to instruct the terminal to first access the network from the secondary frequency band. In this way, the terminal may directly access the network from the secondary frequency band based on the configuration information. An aggregatable frequency band combination corresponding to the secondary frequency band is superior to an aggregatable frequency band combination corresponding to the primary frequency band; therefore, better frequency band aggregation can be obtained when the terminal accesses the network from the secondary frequency band, thereby improving user experience.

Certainly, the aggregatable frequency band combination corresponding to the primary frequency band may be superior. In this case, the base station may not send the configuration information to the terminal, and the terminal accesses the network from the primary frequency band.

FIG. 9 is a schematic structural diagram of a frequency band processing apparatus according to an embodiment of the present invention. The apparatus may be located in a base station and is applied to a communications system with frequency band overlapping. In the communications system, a primary frequency band and a secondary frequency band are configured for a serving cell of a terminal, and the terminal initially accesses a network from the primary frequency band. Referring to FIG. 9, the apparatus includes an obtaining module 901, a determining module 902, and a sending module 903.

The obtaining module 901 is configured to obtain CA capability information of the terminal.

The determining module 902 is configured to determine, based on the CA capability information, that an access frequency band of the terminal is to be switched from the primary frequency band to the secondary frequency band.

The sending module 903 is configured to send a switching instruction to the terminal, where the switching instruction is used to instruct the terminal to switch the access frequency band from the primary frequency band to the secondary frequency band.

In this embodiment, the base station determines, based on the CA capability information of the terminal, that the access frequency band of the terminal is to be switched from the primary frequency band to the secondary frequency band, and sends the switching instruction to the terminal, so that the terminal switches the access frequency band from the primary frequency band to the secondary frequency band according to the switching instruction. After switching, the terminal can obtain a better frequency band combination and achieve a better CA effect, so that larger bandwidth can be obtained and user experience is improved.

Further, the sending module 903 is further configured to send configuration information to the terminal, where the configuration information is used to instruct the terminal to first access the network from the secondary frequency band.

The configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

Optionally, the determining module 902 is specifically configured to: obtain, based on the CA capability information, an aggregatable frequency band combination corresponding to the primary frequency band and an aggregatable frequency band combination corresponding to the secondary frequency band; and determine, based on the aggregatable frequency band combination corresponding to the primary frequency band and the aggregatable frequency band combination corresponding to the secondary frequency band, that the access frequency band of the terminal is to be switched from the primary frequency band to the secondary frequency band.

The foregoing apparatus may be configured to perform the method provided in the foregoing method embodiment. Specific implementations and technical effects are similar to those of the method provided in the foregoing method embodiment, and details are not described herein again.

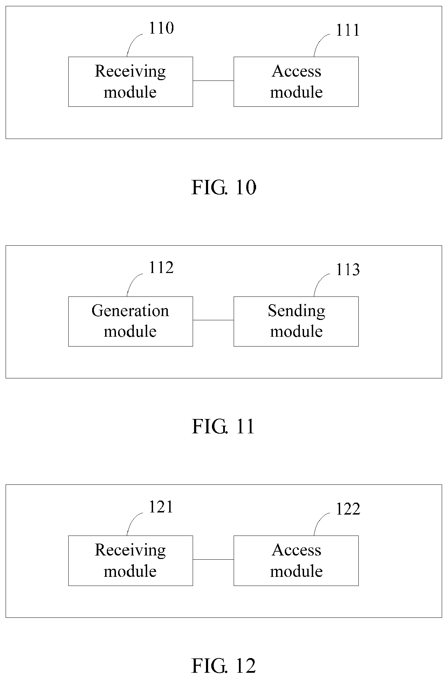

FIG. 10 is a schematic structural diagram of another frequency band processing apparatus according to an embodiment of the present invention. The apparatus may be located in a terminal and is applied to a communications system with frequency band overlapping. In the communications system, a primary frequency band and a secondary frequency band are configured for a serving cell of the terminal, and the terminal initially accesses a network from the primary frequency band. Referring to FIG. 10, the apparatus includes a receiving module 110 and an access module 111.

The receiving module 110 is configured to receive a switching instruction sent by a base station, where the switching instruction is used to instruct the terminal to switch an access frequency band from the primary frequency band to the secondary frequency band.

The access module 111 is configured to switch the access frequency band from the primary frequency band to the secondary frequency band according to the switching instruction.

Optionally, the foregoing receiving module 110 is further configured to receive configuration information sent by the base station, where the configuration information is used to instruct the terminal to first access the network from the secondary frequency band.

Correspondingly, the access module 111 accesses the network from the secondary frequency band based on the configuration information when accessing the network next time.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

The foregoing apparatus may be configured to perform the method provided in the foregoing method embodiment. Specific implementations and technical effects are similar to those of the method provided in the foregoing method embodiment, and details are not described herein again.

FIG. 11 is a schematic structural diagram of another frequency band processing apparatus according to an embodiment of the present invention. The apparatus may be located in a base station and is applied to a communications system with frequency band overlapping. In the communications system, a primary frequency band and a secondary frequency band are configured for a serving cell of a terminal, and the terminal initially accesses a network from the primary frequency band. As shown in FIG. 11, the apparatus includes a generation module 112 and a sending module 113.

The generation module 112 is configured to generate configuration information, where the configuration information is used to instruct the terminal to first access the network from the secondary frequency band.

The sending module 113 is configured to send the configuration information to the terminal.

In this embodiment, the base station sends the configuration information to the terminal, to instruct the terminal to first access the network from the secondary frequency band. In this way, the terminal may directly access the network from the secondary frequency band based on the configuration information. An aggregatable frequency band combination corresponding to the secondary frequency band is superior to an aggregatable frequency band combination corresponding to the primary frequency band; therefore, better frequency band aggregation can be obtained when the terminal accesses the network from the secondary frequency band, thereby improving user experience.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

The foregoing apparatus may be configured to perform the method provided in the foregoing method embodiment. Specific implementations and technical effects are similar to those of the method provided in the foregoing method embodiment, and details are not described herein again.

FIG. 12 is a schematic structural diagram of another frequency band processing apparatus according to an embodiment of the present invention. The apparatus may be located in a terminal and is applied to a communications system with frequency band overlapping. In the communications system, a primary frequency band and a secondary frequency band are configured for a serving cell of the terminal, and the terminal initially accesses a network from the primary frequency band. As shown in FIG. 12, the apparatus includes a receiving module 121 and an access module 122.

The receiving module 121 is configured to receive configuration information sent by a base station, where the configuration information is used to instruct the terminal to first access the network from the secondary frequency band.

The access module 122 is configured to access the network from the secondary frequency band based on the configuration information.

Optionally, the configuration information includes information and a priority of a frequency of the serving cell in the primary frequency band and information and a priority of a frequency of the serving cell in the secondary frequency band, where the priority of the frequency of the serving cell in the secondary frequency band is higher than the priority of the frequency of the serving cell in the primary frequency band.

The foregoing apparatus may be configured to perform the method provided in the foregoing method embodiment. Specific implementations and technical effects are similar to those of the method provided in the foregoing method embodiment, and details are not described herein again.

It should be noted that the foregoing division of modules of the base station is merely logical function division, and during actual implementation, some or all modules may be integrated into one physical entity, or the modules may be physically separated. In addition, all the modules may be implemented by invoking software by a processing element; or all the modules may be implemented by hardware; or some modules may be implemented by invoking software by a processing element, and some modules may be implemented by hardware. For example, the determining module may be an independently disposed processing element, or may be integrated into a chip of the foregoing apparatus for implementation. In addition, the determining module may alternatively be stored in a memory of the foregoing apparatus in a form of program code, and is invoked by a processing element of the foregoing apparatus, to execute the foregoing functions of the determining module. Implementation of other modules is similar to that of the determining module. In addition, all or some of the modules may be integrated, or may be implemented independently. Herein, the processing element may be an integrated circuit with a signal processing capability. During implementation, the steps of the foregoing methods or the foregoing modules may be implemented by using an integrated logic circuit of hardware in the processor element, or by using a software instruction.

For example, the foregoing modules may be configured as one or more integrated circuits that implement the foregoing methods, such as one or more application-specific integrated circuits (Application-Specific Integrated Circuit, ASIC), one or more microprocessors (digital signal processor, DSP), or one or more field programmable gate arrays (Field Programmable Gate Array, FPGA). For another example, when one of the foregoing modules is implemented by invoking program code by a processing element, the processing element may be a general purpose processor, such as a central processing unit (Central Processing Unit, CPU), or another processor that can invoke program code. For still another example, the modules may be integrated together and implemented in a system-on-a-chip (system-on-a-chip, SOC for short) form.

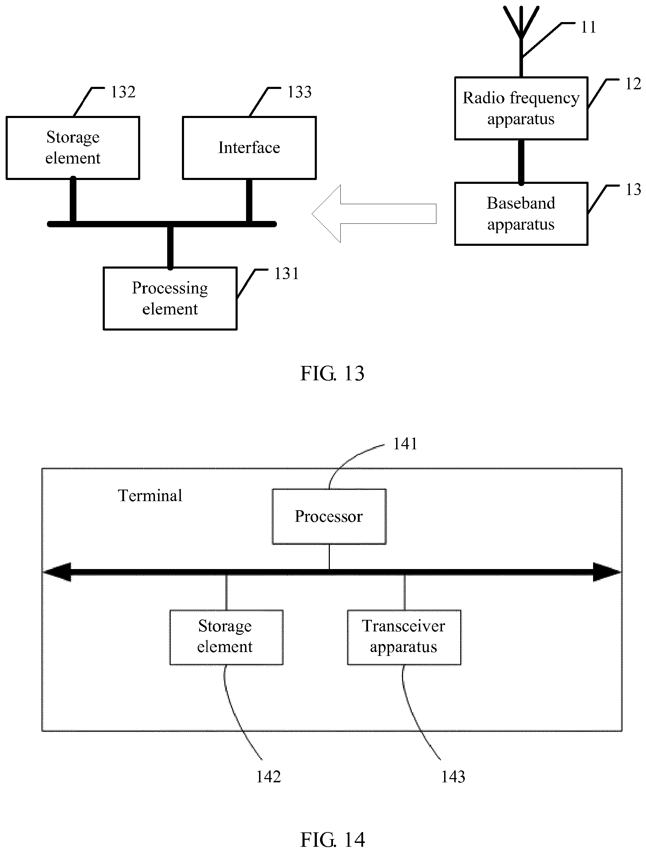

FIG. 13 is a schematic structural diagram of a base station according to an embodiment of the present invention. The base station is applied to a communications system with frequency band overlapping. In the communications system, a primary frequency band and a secondary frequency band are configured for a serving cell of a terminal, and the terminal initially accesses a network from the primary frequency band.

Referring to FIG. 13, the apparatus includes an antenna 11, a radio frequency apparatus 12, and a baseband apparatus 13. The antenna 11 is connected to the radio frequency apparatus 12. In an uplink direction, the radio frequency apparatus 12 receives information through the antenna 11, and sends the received information to the baseband apparatus 13 for processing. In a downlink direction, the baseband apparatus 13 processes to-be-sent information, and sends processed information to the radio frequency apparatus 12. After processing the received information, the radio frequency apparatus 12 sends processed information through the antenna 11.

The foregoing frequency band processing apparatus may be located in the baseband apparatus 13, and the method provided in the foregoing embodiments may be implemented in the baseband apparatus 13. The baseband apparatus 13 includes a processing element 131 and a storage element 132. For example, the baseband apparatus 13 may include at least one baseband processing board. A plurality of chips are disposed on the baseband processing board. As shown in FIG. 13, for example, one of the chips is the processing element 131 and is connected to the storage element 132, to invoke a program in the storage element 132, so as to execute an operation shown in the foregoing method embodiments.

The baseband apparatus 13 may further include an interface 133, configured to exchange information with the radio frequency apparatus 12. For example, the interface is a common public radio interface (common public radio interface, CPRI for short).

Herein, the processing element may be one processor, or may be a collective name for a plurality of processing elements. For example, the processing element may be a CPU or an ASIC, or may be configured as one or more integrated circuits that implement the foregoing method, such as one or more microprocessors DSPs, or one or more field programmable gate arrays FPGAs. The storage element may be one memory or may be a collective name for a plurality of storage elements.

FIG. 14 is a schematic structural diagram of a terminal according to an embodiment of the present invention. The terminal is applied to a communications system with frequency band overlapping. In the communications system, a primary frequency band and a secondary frequency band are configured for a serving cell of the terminal, and the terminal initially accesses a network from the primary frequency band.

Referring to FIG. 14, the terminal includes a processor 141, a storage element 142, and a transceiver apparatus 143.

The transceiver apparatus 143 may be connected to an antenna. In a downlink direction, the transceiver apparatus 143 receives, through the antenna, information sent by a base station, and sends the information to the processor 141 for processing. In an uplink direction, the processor 141 processes data of the terminal, and sends processed data to the base station through the transceiver apparatus 143.

The storage element 142 is configured to store program code that implements the foregoing method embodiments or the modules in the embodiments shown in FIG. 10 and FIG. 12. The processor 141 invokes the program code, to execute an operation of the foregoing method embodiments, so as to implement the modules in the embodiments shown in FIG. 10 and FIG. 12.

Alternatively, some or all of the foregoing units may be implemented in a form of a field programmable gate array (Field Programmable Gate Array, FPGA for short) built in a chip of the terminal. The units may be implemented alone, or may be integrated together.

The processing element herein is similar to that described above, and may be a general purpose processor, such as a CPU, or may be configured as one or more integrated circuits that implement the foregoing methods, such as one or more application-specific integrated circuits (Application-Specific Integrated Circuit, ASIC for short), one or more microprocessors (digital signal processor, DSP for short), or one or more field programmable gate arrays (Field Programmable Gate Array, FPGA for short). The storage element may be one storage apparatus or may be a collective name for a plurality of storage elements.

In addition, a plurality of interfaces may be provided on the processor, and are configured to be connected to a peripheral device or an interface circuit that is connected to a peripheral device. For example, the interfaces are configured to be connected to an interface of a display, an interface of a camera, an interface of an audio processing element, and the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments.

## Claims

1. A frequency band processing method, wherein the method is applied to a communications system with frequency band overlapping; in the communications system, a primary frequency band and a secondary frequency band are configured for a serving cell of a terminal, the primary frequency band and the secondary frequency band being overlapping frequency bands, and the terminal initially accesses a network from the primary frequency band; and the method comprises:
obtaining (s701), by a base station, carrier aggregation, CA, capability information from the terminal;
determining (s702), by the base station based on the CA capability information, that an access frequency band of the terminal is to be switched from the primary frequency band to the secondary frequency band; and
sending (s703), by the base station, a switching instruction to the terminal, wherein the switching instruction is used to instruct the terminal to switch the access frequency band from the primary frequency band to the secondary frequency band
wherein the determining, by the base station based on the CA capability information, that the access frequency band of the terminal is to be switched from the primary frequency band to the secondary frequency band comprises:
obtaining, by the base station based on the CA capability information reported by the terminal, an aggregatable frequency band combination corresponding to the primary frequency band and an aggregatable frequency band combination corresponding to the secondary frequency band; and
determining, by the base station based on the aggregatable frequency band combination corresponding to the primary frequency band and the aggregatable frequency band combination corresponding to the secondary frequency band, that the access frequency band of the terminal is to be switched from the primary frequency band to the secondary frequency band,
**characterized in that** the method further comprises:
sending (s705), by the base station, configuration information to the terminal, wherein the configuration information is used to instruct the terminal to first access the network from the secondary frequency band,
wherein the configuration information comprises information and a priority of a frequency of the serving cell in the primary frequency band and information and a priority of a frequency of the serving cell in the secondary frequency band, wherein the priority of the frequency of the serving cell in the secondary frequency band is higher than the priority of the frequency of the serving cell in the primary frequency band.

2. A frequency band processing method, wherein the method is applied to a communications system with frequency band overlapping; in the communications system, a primary frequency band and a secondary frequency band are configured for a serving cell of a terminal, the primary frequency band and the secondary frequency band being overlapping frequency bands, and the terminal initially accesses a network from the primary frequency band; and the method comprises:
reporting (s701), by the terminal, carrier aggregation, CA, capability information of the terminal to a base station;
receiving (s703), by the terminal, a switching instruction from the base station, wherein the switching instruction is used to instruct the terminal to switch the access frequency band from the primary frequency band to the secondary frequency band;
accessing (s704), by the terminal, the network from the secondary frequency band according to the switching instruction,
**characterized in that** the method further comprises:
receiving (s705), by the terminal, configuration information from the base station, wherein the configuration information is used to instruct the terminal to first access the network from the secondary frequency band; and
accessing, by the terminal, the network from the secondary frequency band based on the configuration information next time,
wherein the configuration information comprises information and a priority of a frequency of the serving cell in the primary frequency band and information and a priority of a frequency of the serving cell in the secondary frequency band, wherein the priority of the frequency of the serving cell in the secondary frequency band is higher than the priority of the frequency of the serving cell in the primary frequency band.

3. A frequency band processing apparatus, wherein the apparatus is applied to a base station in a communications system with frequency band overlapping; in the communications system, a primary frequency band and a secondary frequency band are configured for a serving cell of a terminal, the primary frequency band and the secondary frequency band being overlapping frequency bands, and the terminal initially accesses a network from the primary frequency band; and the apparatus comprises means (901, 902, 903) configured to perform the method according to claim 1.

4. A frequency band processing apparatus, wherein the apparatus is applied to a terminal in a communications system with frequency band overlapping; in the communications system, a primary frequency band and a secondary frequency band are configured for a serving cell of the terminal, the primary frequency band and the secondary frequency band being overlapping frequency bands, and the terminal initially accesses a network from the primary frequency band; and the apparatus comprises means (110, 111) configured to perform the method according to claim 2

5. A computer readable storage medium, configured to store a program, wherein when being invoked by a processor, the program is used to perform the method according to claim 1 or the method according to claim 2.

## Patentansprüche

1. Frequenzband-Verarbeitungsverfahren, wobei das Verfahren auf ein Kommunikationssystem mit Frequenzbandüberschneidung angewandt wird, wobei in dem Kommunikationssystem ein primäres Frequenzband und ein sekundäres Frequenzband für eine versorgende Zelle eines Endgeräts konfiguriert sind, wobei das primäre Frequenzband und das sekundäre Frequenzband sich überschneidende Frequenzbänder sind und das Endgerät anfänglich von dem primären Frequenzband aus auf ein Netzwerk zugreift, und wobei das Verfahren Folgendes umfasst:
Gewinnen (s701) von Trägeraggregations-, CA-, Fähigkeitsinformationen von dem Endgerät durch eine Basisstation,
Bestimmen (s702) durch die Basisstation, basierend auf den CA-Fähigkeitsinformationen, dass ein Zugriffsfrequenzband des Endgeräts von dem primären Frequenzband auf das sekundäre Frequenzband umzuschalten ist, und
Senden (s703) einer Umschaltanweisung an das Endgerät durch die Basisstation, wobei die Umschaltanweisung verwendet wird, um das Endgerät anzuweisen, das Zugriffsfrequenzband von dem primären Frequenzband auf das sekundäre Frequenzband umzuschalten,
wobei das Bestimmen durch die Basisstation, basierend auf den CA-Fähigkeitsinformationen, dass das Zugriffsfrequenzband des Endgeräts von dem primären Frequenzband auf das sekundäre Frequenzband umzuschalten ist,
Folgendes umfasst:
Gewinnen einer aggregierbaren Frequenzbandkombination, die dem primären Frequenzband entspricht, und einer aggregierbaren Frequenzbandkombination, die dem sekundären Frequenzband entspricht, durch die Basisstation, basierend auf den CA-Fähigkeitsinformationen, und
Bestimmen, durch die Basisstation, basierend auf der aggregierbaren Frequenzbandkombination, die dem primären Frequenzband entspricht, und der aggregierbaren Frequenzbandkombination, die dem sekundären Frequenzband entspricht, dass das Zugriffsfrequenzband des Endgeräts von dem primären Frequenzband auf das sekundäre Frequenzband umzuschalten ist,
**dadurch gekennzeichnet, dass** das Verfahren ferner Folgendes umfasst:
Senden (s705) von Konfigurationsinformationen an das Endgerät durch die Basisstation, wobei die Konfigurationsinformationen verwendet werden, um das Endgerät anzuweisen, zuerst von dem sekundären Frequenzband aus auf das Netzwerk zuzugreifen,
wobei die Konfigurationsinformationen Informationen und eine Priorität einer Frequenz der versorgenden Zelle in dem primären Frequenzband und Informationen und eine Priorität einer Frequenz der versorgenden Zelle in dem sekundären Frequenzband umfassen, wobei die Priorität der Frequenz der versorgenden Zelle in dem sekundären Frequenzband höher als die Priorität der Frequenz der versorgenden Zelle in dem primären Frequenzband ist.

2. Frequenzband-Verarbeitungsverfahren, wobei das Verfahren auf ein Kommunikationssystem mit Frequenzbandüberschneidung angewandt wird, wobei in dem Kommunikationssystem ein primäres Frequenzband und ein sekundäres Frequenzband für eine versorgende Zelle eines Endgeräts konfiguriert sind, wobei das primäre Frequenzband und das sekundäre Frequenzband sich überschneidende Frequenzbänder sind und das Endgerät anfänglich von dem primären Frequenzband aus auf ein Netzwerk zugreift, und wobei das Verfahren Folgendes umfasst:
Melden (s701) von Trägeraggregations-, CA-, Fähigkeitsinformationen des Endgeräts an eine Basisstation durch das Endgerät,
Empfangen (s703) einer Umschaltanweisung von der Basisstation durch das Endgerät, wobei die Umschaltanweisung verwendet wird, um das Endgerät anzuweisen, das Zugriffsfrequenzband von dem primären Frequenzband auf das sekundäre Frequenzband umzuschalten,
Zugreifen (s704) auf das Netzwerk von dem sekundären Frequenzband aus durch das Endgerät gemäß der Umschaltanweisung,
**dadurch gekennzeichnet, dass** das Verfahren ferner Folgendes umfasst:
Empfangen (s705) von Konfigurationsinformationen von der Basisstation durch das Endgerät, wobei die Konfigurationsinformationen verwendet werden, um das Endgerät anzuweisen, zuerst von dem sekundären Frequenzband aus auf das Netzwerk zuzugreifen, und
das nächste Mal Zugreifen auf das Netzwerk von dem sekundären Frequenzband aus durch das Endgerät, basierend auf den Konfigurationsinformationen,
wobei die Konfigurationsinformationen Informationen und eine Priorität einer Frequenz der versorgenden Zelle in dem primären Frequenzband und Informationen und eine Priorität einer Frequenz der versorgenden Zelle in dem sekundären Frequenzband umfassen, wobei die Priorität der Frequenz der versorgenden Zelle in dem sekundären Frequenzband höher als die Priorität der Frequenz der versorgenden Zelle in dem primären Frequenzband ist.

3. Frequenzband-Verarbeitungsvorrichtung, wobei die Vorrichtung auf eine Basisstation in einem Kommunikationssystem mit Frequenzbandüberschneidung angewandt wird, wobei in dem Kommunikationssystem ein primäres Frequenzband und ein sekundäres Frequenzband für eine versorgende Zelle eines Endgeräts konfiguriert sind, wobei das primäre Frequenzband und das sekundäre Frequenzband sich überschneidende Frequenzbänder sind und das Endgerät anfänglich von dem primären Frequenzband aus auf ein Netzwerk zugreift, und wobei die Vorrichtung Mittel (901, 902, 903) umfasst, die dafür konfiguriert sind, das Verfahren nach Anspruch 1 auszuführen.

4. Frequenzband-Verarbeitungsvorrichtung, wobei die Vorrichtung auf ein Endgerät in einem Kommunikationssystem mit Frequenzbandüberschneidung angewandt wird, wobei in dem Kommunikationssystem ein primäres Frequenzband und ein sekundäres Frequenzband für eine versorgende Zelle des Endgeräts konfiguriert sind, wobei das primäre Frequenzband und das sekundäre Frequenzband sich überschneidende Frequenzbänder sind und das Endgerät anfänglich von dem primären Frequenzband aus auf ein Netzwerk zugreift, und wobei die Vorrichtung Mittel (110, 111) umfasst, die dafür konfiguriert sind, das Verfahren nach Anspruch 2 auszuführen.

5. Computerlesbares Speichermedium, das dafür konfiguriert ist, ein Programm zu speichern, wobei das Programm bei Aufruf durch einen Prozessor verwendet wird, um das Verfahren nach Anspruch 1 oder das Verfahren nach Anspruch 2 auszuführen.

## Revendications

1. Procédé de traitement de bande de fréquences, le procédé étant appliqué à un système de communication avec un chevauchement de bandes de fréquences ; dans le système de communication, une bande de fréquences principale et une bande de fréquences secondaire étant configurées pour une cellule de desserte d'un terminal, la bande de fréquences principale et la bande de fréquences secondaire étant des bandes de fréquences qui se chevauchent, et le terminal accédant au départ à un réseau à partir de la bande de fréquences principale ; et le procédé comprenant :
obtenir (s701), par une station de base, des informations de capacité d'agrégation de porteuses, CA, à partir du terminal ;
déterminer (s702), par la station de base sur la base des informations de capacité de CA, qu'une bande de fréquences d'accès du terminal doit être commutée de la bande de fréquences principale à la bande de fréquences secondaire ; et
envoyer (s703), par la station de base, une instruction de commutation au terminal, dans lequel l'instruction de commutation est utilisée pour ordonner au terminal de commuter la bande de fréquences d'accès de la bande de fréquences principale à la bande de fréquences secondaire,
dans lequel la détermination, par la station de base sur la base des informations de capacité de CA, que la bande de fréquences d'accès du terminal doit être commutée de la bande de fréquences principale à la bande de fréquences secondaire comprend :
obtenir, par la station de base sur la base des informations de capacité de CA rapportées par le terminal, une combinaison de bandes de fréquences agrégeables correspondant à la bande de fréquences principale et une combinaison de bandes de fréquences agrégeables correspondant à la bande de fréquences secondaire ; et
déterminer, par la station de base sur la base de la combinaison de bandes de fréquences agrégeables correspondant à la bande de fréquences principale et de la combinaison de bandes de fréquences agrégeables correspondant à la bande de fréquences secondaire, que la bande de fréquences d'accès du terminal doit être commutée de la bande de fréquences principale à la bande de fréquences secondaire,
**caractérisé en ce que** le procédé comprend en outre :
envoyer (s705), par la station de base, des informations de configuration au terminal, dans lequel les informations de configuration sont utilisées pour ordonner au terminal d'accéder d'abord au réseau à partir de la bande de fréquences secondaire,
dans lequel les informations de configuration comprennent des informations et une priorité d'une fréquence de la cellule de desserte dans la bande de fréquences principale et des informations et une priorité d'une fréquence de la cellule de desserte dans la bande de fréquences secondaire, dans lequel la priorité de la fréquence de la cellule de desserte dans la bande de fréquences secondaire est supérieure à la priorité de la fréquence de la cellule de desserte dans la bande de fréquences principale.

2. Procédé de traitement de bande de fréquences, le procédé étant appliqué à un système de communication avec un chevauchement de bandes de fréquences ; dans le système de communication, une bande de fréquences principale et une bande de fréquences secondaire étant configurées pour une cellule de desserte d'un terminal, la bande de fréquences principale et la bande de fréquences secondaire étant des bandes de fréquences qui se chevauchent, et le terminal accédant au départ à un réseau à partir de la bande de fréquences principale ; et le procédé comprenant :
rapporter (s701), par le terminal, des informations de capacité d'agrégation de porteuses, CA, du terminal à une station de base ;
recevoir (s703), par le terminal, une instruction de commutation à partir de la station de base, dans lequel l'instruction de commutation est utilisée pour ordonner au terminal de commuter la bande de fréquences d'accès de la bande de fréquences principale à la bande de fréquences secondaire ;
accéder (s704), par le terminal, au réseau à partir de la bande de fréquences secondaire en fonction de l'instruction de commutation,
**caractérisé en ce que** le procédé comprend en outre :
recevoir (s705), par le terminal, des informations de configuration à partir de la station de base, dans lequel les informations de configuration sont utilisées pour ordonner au terminal d'accéder d'abord au réseau à partir de la bande de fréquences secondaire ; et
accéder, par le terminal, au réseau à partir de la bande de fréquences secondaire sur la base des informations de configuration la fois suivante,
dans lequel les informations de configuration comprennent des informations et une priorité d'une fréquence de la cellule de desserte dans la bande de fréquences principale et des informations et une priorité d'une fréquence de la cellule de desserte dans la bande de fréquences secondaire, dans lequel la priorité de la fréquence de la cellule de desserte dans la bande de fréquences secondaire est supérieure à la priorité de la fréquence de la cellule de desserte dans la bande de fréquences principale.

3. Appareil de traitement de bande de fréquences, l'appareil étant appliqué à une station de base dans un système de communication avec un chevauchement de bandes de fréquences ; dans le système de communication, une bande de fréquences principale et une bande de fréquences secondaire étant configurées pour une cellule de desserte d'un terminal, la bande de fréquences principale et la bande de fréquences secondaire étant des bandes de fréquences qui se chevauchent, et le terminal accédant au départ à un réseau à partir de la bande de fréquences principale ; et l'appareil comprenant des moyens (901, 902, 903) configurés pour effectuer le procédé selon la revendication 1.

4. Appareil de traitement de bande de fréquences, l'appareil étant appliqué à un terminal dans un système de communication avec un chevauchement de bandes de fréquences ; dans le système de communication, une bande de fréquences principale et une bande de fréquences secondaire étant configurées pour une cellule de desserte du terminal, la bande de fréquences principale et la bande de fréquences secondaire étant des bandes de fréquences qui se chevauchent, et le terminal accédant au départ à un réseau à partir de la bande de fréquences principale ; et l'appareil comprenant des moyens (110, 111) configurés pour effectuer le procédé selon la revendication 2.

5. Support de stockage lisible par ordinateur, configuré pour stocker un programme, dans lequel lorsqu'il est invoqué par un processeur, le programme est utilisé pour exécuter le procédé selon la revendication 1 ou le procédé selon la revendication 2.
